# EUROPEAN PATENT APPLICATION

(11) **EP 4 825 831 A1**
(43) Date of publication of application: **21.10.2026**
(21) Application number: 26172868.7
(22) Date of filing: 16.04.2026
(51) Int. Cl.: C04B 41/00, C04B 41/45, C04B 41/52, C04B 41/53, C04B 41/91, B32B 18/00, C04B 111/00

(54) **REPLACING EXISTING COATING LAYERS OR REPAIRING DAMAGED COATING LAYERS IN CMC COMPONENTS**

(30) Priority: 16.04.2025 US 202519180679
(71) Applicant: RTX Corporation, Farmington, CT 06032 (US)
(72) Inventor: UCASZ, Mark, Middletown, 06457 (US)
(74) Representative: Dehns

(57) **Abstract**

Ceramic matrix composite (CMC) components damaged coating systems can be repaired by removing, for example by, mechanical grinding, milling, or abrading, at least partially the one or more damaged coating layers to produce an intermediate CMC component. One or more replacement coating layers are then applied to replace the one or more removed damaged coating layers and produce a repaired CMC component. After the at least partial removal of the one or more damaged coating layers, the resultant surface of the intermediate CMC component can be textured or roughened to improve the adherence of the one or more replacement coating layers.

## Description

### FIELD OF THE INVENTION

The present disclosure relates generally to ceramic matrix composites (CMCs) with coating layers. In particular, the present disclosure concerns methods for repairing damaged coating layers or refurbishing coating layers on CMC components.

### BACKGROUND OF THE INVENTION

Turbomachinery, such as gas turbine engines, have components (including, as nonlimiting examples, turbine blades, turbine vanes, blade outer air seals (BOAS), BOAS segments, other seals, vane airfoils and platforms therefor, blade airfoils and platforms therefor, and combustor liners) that are exposed to hostile environments due to, for example, high temperatures, corrosive agents (e.g., water vapor), and oxidative conditions. Therefore, it desirable that such components be made of materials with high heat resistance such as ceramic matrix composites (CMCs).

While CMC materials can withstand much higher operating temperatures (e.g., greater than 1400°C) than superalloys, CMC components are susceptible to erosion/degradation due to exposure to the high temperatures and corrosive agents (e.g., water vapor) associated with the high-energy, high temperature gas flow from the combustion section. To protect the CMC components, coating can be applied to provide protection from the high temperatures and/or corrosive agents.

For example, CMC materials can contain SiC. Exposure of SiC to oxygen can result in the SiC reacting with O₂ to form silica (SiO₂). If high temperature water vapor is present, then the silica can react with H₂O to form gaseous reaction products such as Si(OH)₄. This process results in volatilization of Si from the SiC material causing erosion/degradation of the CMC component. For these reasons, CMC components can be provided with coatings to enhance their ability to withstand high temperatures and to protect the underlying substrates from the corrosive agents such as water vapor present in the high-energy, high temperature gas flow.

Environmental barrier coatings (EBCs) can be applied to the surface CMC components to protect the material from corrosive agents. EBCs can protect underlying CMCs from water/steam erosion and calcium-magnesium-alumino-silicate ("CMAS"; e.g., CaO-MgO-Al₂O₃-SiO₂) attack, such as CMAS deposits. For example, EBCs may provide a dense and at least partially hermetic seal for CMC materials thereby reducing exposure of the surface and interior (via penetration through pores and cracks) to high temperature water vapor, corrosive species such as CMAS, and the like. Thus, EBCs may reduce degradation of CMCs and extend the operational lifespan of components made therefrom.

A further type of coating used in gas turbine engine components are thermal barrier coatings (TBCs). TBCs are ceramic coatings that exhibit very low thermal conductivity and thus protect the underlying substrate to which they are applied from excessive temperatures. TBCs can be applied to components having CMC substrates that are exposed to high temperatures to provide thermal insulation for underlying the CMC substrates.

An additional type of coatings that can be applied to gas turbine engine components are machinable coatings. Machinable coatings can be used to prevent direct contact between the underlying CMC material and other parts of the gas turbine engine, such as metallic support hardware. Machinable coatings can also be used to provide a suitable surface on CMC components for seals such as brush seals.

Additionally, CMC components can be positioned close to moving parts of the gas turbine engine, such as turbine blades, and such closes proximity can lead to undesired contact and damage to the moving parts. For example, to avoid damage to the blades, surfaces that are in close proximity to rotating blades, such as seals, are often provided with abradable coatings. These abradable coatings are designed so that the blade tips act as an abrading component with respect to the abradable coating. That is, the blade tip materials are harder than those used for the abradable coating. With the blade tip materials being harder, the blade tips will abrade or cut into the abradable coating when a blade tip contacts the abradable seal during the engine operating cycle.

Since EBCs and TBCs, as well as abradable coatings, are exposed to the high-energy, high temperature gas flow, i.e., the gaspath, these coatings are subject not only to the high temperatures and corrosive agents, but also are susceptible to damage from foreign object damage (FOD) and domestic object damage (DOD). Machinable coatings are also subject to damage and operational wear and tear. As a result, the coated CMC components will eventually need to be removed and replaced due to the deterioration/degradation/damage of the coatings. Further, abradable coatings are designed to be worn down to avoid damage to the associated moving part (e.g., turbine blade). Once these coating have deteriorated or are damaged or worn down, the CMC component is removed and replaced.

There exists a need for methods to repair damaged coatings on CMC components so as to reuse the CMC components rather than remove them from service.

### SUMMARY OF THE INVENTION

In general, the present disclosure relates to methods for repairing defective and/or damaged CMC components. In particular, the present disclosure relates to methods for repairing defective or damaged coating systems in CMC components.

The present disclosure is directed, in a first aspect, to a method for a ceramic matrix composite (CMC) component having one or more damaged coating layers, comprising:
removing at least partially the one or more damaged coating layers from a CMC component comprising a substrate and a coating system having multiple coating layers to produce an intermediate CMC component comprising the substrate and at least one partial coating layer, and
applying one or more replacement coating layers to replace the one or more at least partially removed damaged coating layers and produce a repaired CMC component.

The present disclosure is also directed, in a further aspect, to a method of refurbishing a defective ceramic matrix component (CMC) comprising:
providing a ceramic matrix component (CMC) having a coating system comprising a plurality of layers, including an environmental barrier coating layer, an abradable coating layer, and/or a thermal barrier coating layer,
removing at least partially one or more of the coating layers to produce an intermediate CMC component comprising the substrate and at least one partial coating layer, and
applying one or more replacement coating layers to replace the one or more removed coating layers and produce a refurbished CMC component.

The present disclosure is further directed, in an additional aspect, to a repaired/refurbished ceramic matrix component (CMC) comprising:
a ceramic matrix component (CMC) from which one or more coating layers is partially removed, and
one or more coating layers applied to the ceramic matrix component (CMC) on top of the one or more partially removed coating layers to replace one or more partially removed coating layers and produce a repaired/refurbished CMC component.

In further embodiments of the present disclosure, including further embodiments of the above exemplary embodiments, the one or more damaged coating layers is removed by mechanical grinding, milling, laser, water jet, chemical stripping, or abrading.

In further embodiments of the present disclosure, including further embodiments of the above exemplary embodiments, the coating system comprises a bond layer and an environmental barrier coating layer.

In further embodiments of the present disclosure, including further embodiments of the above exemplary embodiments, the coating system comprises a bond layer and a thermal barrier coating layer.

In further embodiments of the present disclosure, including further embodiments of the above exemplary embodiments, the coating system comprises a bond layer and an abradable coating layer.

In further embodiments of the present disclosure, including further embodiments of the above exemplary embodiments, the coating system comprises a bond layer and a machinable coating layer.

In further embodiments of the present disclosure, including further embodiments of the above exemplary embodiments, the coating system comprises a bond layer adjacent the substrate and one or more additional layers on top of the bond coat, and the one or more damaged coating layers removed from the CMC component include part of the bond coat.

In further embodiments of the present disclosure, including further embodiments of the above exemplary embodiments, after partial removal of the one or more damaged coating layers, the resultant surface of the intermediate CMC component is textured or roughened to improve the adherence of the one or more replacement coating layers.

In further embodiments of the present disclosure, including further embodiments of the above exemplary embodiments, the texturing of the surface of the intermediate CMC component is performed by laser texturing, grit blasting, or machine texturing.

In further embodiments of the present disclosure, including further embodiments of the above exemplary embodiments, after partial removal of the one or more damaged coating layers, the resultant surface of the intermediate CMC component is subjected to chemically etching to roughened the resultant surface of the intermediate CMC component.

In further embodiments of the present disclosure, including further embodiments of the above exemplary embodiments, the CMC component is a blade outer air seal segment (BOAS segment), a turbine blade, a turbine blade platform, a vane, a vane platform, a combustor liner, a flap or seal of an exhaust nozzle, a flame holder, or an augmenter liner.

In further embodiments of the present disclosure, including further embodiments of the above exemplary embodiments, the coating system comprises a bond layer and an environmental barrier coating layer, thermal barrier layer, machinable coating layer, or abradable coating layer , and at least part of the environmental barrier coating layer thermal barrier layer, machinable coating layer, or abradable coating layer and optionally part of the bond layer are removed.

### BRIEF DESCRIPTION OF FIGURES

The features of the disclosure believed to be novel and the elements characteristic of the invention are set forth with particularity in the appended claim. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
- Fig. 1: schematically illustrates a partial cross section of an exemplary gas turbine engine;
- Fig. 2: is cross sectional view of a ceramic matrix composite (CMC) component having a multilayered coating system;
- Fig. 3: is cross sectional view of another embodiment of a ceramic matrix composite (CMC) component having a multilayered coating system;
- Fig. 4: is cross sectional view of a ceramic matrix composite (CMC) component having a multilayered coating system wherein one or more layers of the coating system are damaged;
- Fig. 5: is cross sectional view of a ceramic matrix composite (CMC) component having a multilayered coating system wherein one or more damaged layers of the coating system are at least partially removed;
- Fig. 6: is cross sectional view of a ceramic matrix composite (CMC) component having a multilayered coating system wherein one or more damaged layers of the coating system are at least partially removed and the resultant surface is textured;
- Fig. 7: is cross sectional view of a ceramic matrix composite (CMC) component having a multilayered coating system wherein one or more partially removed coating layers are replace by new layer(s).

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

The present disclosure provides a method for repairing a damaged coating system of a CMC component, or refurbishing the coating system of a CMC component, wherein one or more coating layers are at least partially removed and then one or more replacement coating layers are applied to replace the at least partially removed damaged coating layers and produce a repaired CMC component.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

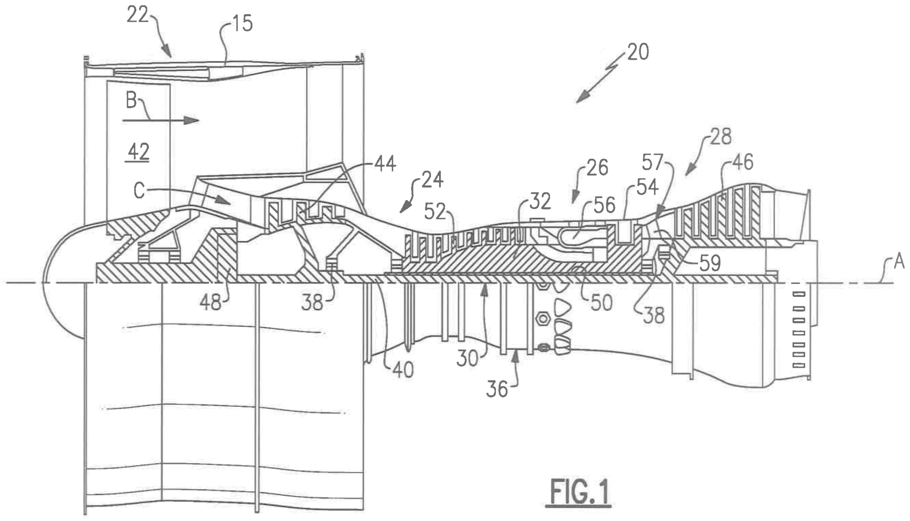

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low-speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low-speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low-speed spool 30. High-speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low-speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, gas turbine engine components can be made from CMC materials. Such components include blade outer air seal(s) (BOAS(s)), BOAS segments, other seals, vane airfoils and platforms therefor, blade airfoils and platforms therefor, combustor liners, support rings, nozzle liners, flaps of converging-diverging nozzles (De Laval nozzle), a flame holder, or an augmenter liner.

In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

The fibers of the preform can, optionally, be provided with one or several interfaces deposited prior to introduction of a matrix material into the preform. This interface coating can be, for example, a coating of boron nitride, silicon-doped boron nitride, boron-doped carbon, boron carbide, titanium nitride, or zirconium nitride which is applied by chemical vapor infiltration (CVI). The interface coating(s) is/are used to ensure that the composite will fail in a non-brittle manner by preventing crack formation and/or propagation.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), chemical liquid-vapor deposition (CLVD), melt infiltration (MI) (such as liquid silicon infiltration (LSI)), and polymer infiltration and pyrolysis (PIP). Chemical vapor infiltration (CVI) involves introducing gaseous precursors into the porous CMC preform. These precursors react at the surface of the fibers, depositing additional material and filling the voids. Chemical liquid-vapor deposition uses liquid precursors that vaporize and infiltrate the preform. The liquid-to-vapor conversion occurs at the fiber surface, leading to densification. Liquid silicon infiltration utilizes liquid (molten) silicon to infiltrate the CMC preform. Silicon reacts with carbon or other constituents of the CMC preform, forming a dense matrix. In polymer infiltration and pyrolysis, a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

As mentioned above, CMC components can be provided with various coating systems such as EBCs, TBCs, and abradable coatings. These coating systems may be multilayered structures. For example, an EBC/TBC/abradable coating system can be a two layered system made up of an initial bond coat applied to the surface of the CMC substrate and a top coat. Other EBC/TBC/abradable coating systems can have more layers, for example, a multilayered bond coat and a top coat layer, or a bond coat layer, an inner top coat layer, and an outer top coat layer.

EBC top coat layers can be made from a variety of materials or mixtures of materials. For example, the top coat of the EBC can comprise oxides selected from ZrO₂, HfO₂, HfSiO₄, RE₂SiO₅, RE₂Si₂O₇, and/or RE₂O₃, where RE is a rare earth metal (i.e., RE is Sc, Y, La, Ce, Pr, Nd, Pm, Sm, Eu, Gd, Tb, Dy, Ho, Er, Tm, Yb, or Lu). Other materials used in EBC topcoats include, for example, zirconium silicate (ZrSiO₄), barium strontium aluminosilicates (BSAS), strontium aluminosilicates (SAS), barium aluminosilicates (BAS), mullite, silicon oxynitrides, alkali silicates, alkaline earth silicates, and alkaline earth aluminosilicates. TBC top coat layers and abradable top coat layers can also be made from a variety of materials or mixtures of materials. For example, the TBC top coat or abradable top coat can comprises Y/Gd stabilized zirconium (YSZ, GDZ) hafnon, mixtures of hafnon and zircon, and rare earth disilicates (RE₂Si₂O₇), wherein RE is Sc, Y, La, Ce, Pr, Nd, Pm, Sm, Eu, Gd, Tb, Dy, Ho, Er, Tm, Yb, or Lu. Similarly, machinable coatings can also be made from a variety of materials, for example, mullite.

The thickness used for the EBC top coat layer can vary. For example, the EBC topcoat layer can have a thickness of up to about 1,000 µm, such as 5 to 1000 µm, 25 to 1,000 µm, 25 to 500 µm, or 50 to 200 µm. The thicknesses used for the TBC top coat and abradable top coat can also vary. For example, the TBC top coat can have a thickness of up to about 2,000 µm, e.g. 25 to 2,000 µm, 100 to 2000 µm, 100 to 1000 µm, 100 to 500 µm, or 200 to 300 µm. The abradable top coat can, for example, have a thickness of 50 µm to 1500 µm, such as 50 µm to 1000 µm, 50 µm to 750 µm, 50 µm to 500 µm, and 50 to 250 µm. The thickness of machinable coating can be, for example, up to about 2,500 µm, such as 100 to 2,500 µm, 500 to 2,500 µm, or 500 to 2,000 µm, or 500 to 1,500 µm.

The bond coat layer in EBC/TBC/abradable/machinable coating systems for CMC components can be a Si-containing material such as silicon, silica, silicates, and silicides, for example, a silicate material with one or more additives such as Al, Mg, Ba, Ca, B, and/or Na. The thickness of the bond coat layer can be, for example, up to about 1000 µm, such as 1 to 500 µm, 1 to 200 µm, 1 to 150 µm, 5 to 100 µm, or 10 to 50 µm.

The layers of the EBC/TBC/abradable/machinable coating systems can be applied to a CMC substrate by a variety of techniques. For example, the layers may be applied by atmospheric plasma spray (APS), vacuum plasma spraying (VPS), low pressure plasma spray (LPPS), suspension plasma spraying (SPS), high velocity oxygen fuel spraying (HVOF), high velocity air fuel spraying (HVAF) chemical vapor deposition (CVD), physical vapor deposition (PVD), electron beam-physical vapor deposition (EB-PVD), plasma-spray physical vapor deposition (PS-PVD), or slurry coating.

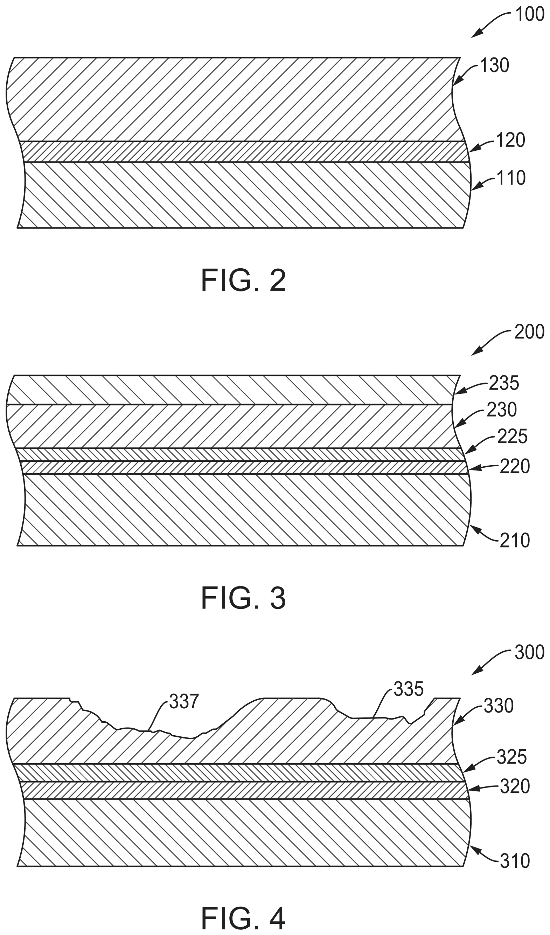

FIG. 2 schematically illustrates a cross section of an embodiment of a CMC component 100 having a multilayered coating system. As shown, an outer surface of a CMC substrate 110 is coated with a bond coat layer 120 (e.g., a SiC bond coat). A top coat layer 130 (EBC, TBC, or abradable coating) is deposited on a topmost surface of bond coat 120. As noted above, the layers can have a variety of thicknesses and the individual layers can be uniform or regions of individual layers can have different thicknesses.

FIG. 3 schematically illustrates a cross section of another embodiment of a CMC component 200 having a multilayered coating system. In this embodiment, an outer surface of a CMC substrate 210 is coated with a first bond coat layer 220, which in turn is coated with a second bond coat layer 225. A first top coat layer 230 is deposited on a topmost surface of bond coat second bond coat layer 225, which in turn is coated with a second top coat layer 235. The use of multiple bond coat layers to improve overall adherence of the top coat layers to the substrate. Multiple top coat layers can be used to improve certain properties. For example, the first top coat layer 230 may have a higher resistance to corrosive agents whereas second top coat layer 235 may have a higher thermal resistance.

FIG. 4 schematically illustrates a cross section of a CMC component 300 with a multilayered coating system in which one or more layers of the coating system is damaged. As shown, an outer surface of a CMC substrate 310 is coated with a first bond coat layer 320, which in turn is coated with a second bond coat layer 325, which in turn is coated with a top coat layer 330 (EBC, TBC, machinable, or abradable coating). Top coat layer 330 is damaged at locations 335 and 337 due to degradation resulting from exposure to high temperatures and/or corrosive agents, or due damage from FOD and/or DOD.

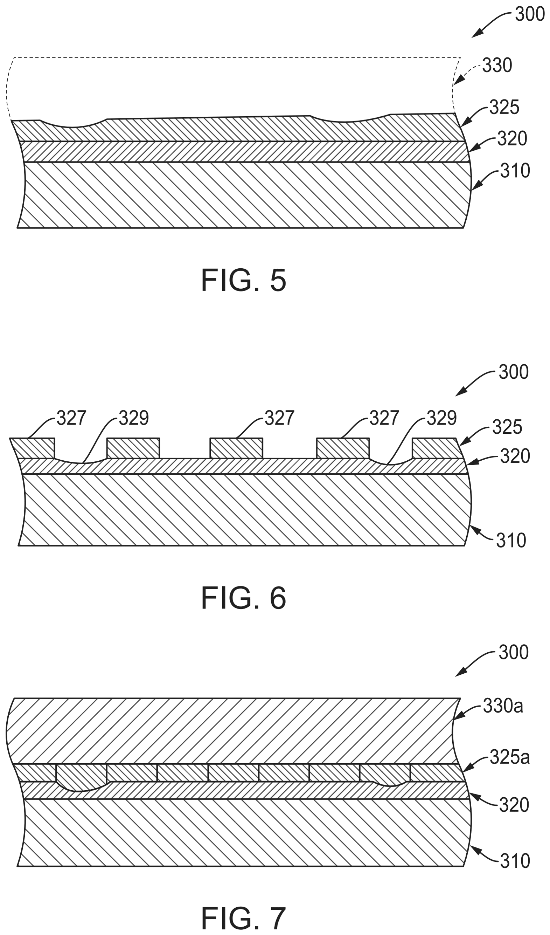

In FIG. 5, the damaged top coat layer 330 (shown with dotted lines) has been removed to yield an intermediate CMC component comprising the substrate and at least one partial coating layer. While this cross-sectional view shows a region in which all of top coat layer 330 is removed, it should be recognized the partial removal is also possible, e.g., removing only those regions of top coat layer 330 that have sustained damage. Removal of the layer can be achieved through a variety of techniques such as mechanical grinding, milling, laser, chemical stripping, abrading, belt sanding, water jet, abrasion by liquid stream with particles (e.g., SiC or SiO₂ particles), etc. The process of removing all or parts of the damaged top coat layer 330 can also result in partial removal of an underlying layer, e.g., second bond coat layer 325. Removal of an underlaying layer (i.e., a layer beneath the damaged layer(s)) may be desirable to facilitate application of the new coating(s) or if it is desired to have a semi-fresh CMC substrate prior to reapplication of the coating(s).

Once the damaged layer(s) is removed, the resultant surface will be relatively smooth . In order to improve adherence of the new coating layer(s), it may be desirable to roughen or texture the surface. For example, the surface can be textured by laser texturing, grit blasting, water abrasion, or machine texturing. Alternatively, or in addition, the surface can be subject to chemical etching (e.g., using HF, NaOH, or KOH) to provide roughening. Masks can be used during these texturing techniques to provide areas differing in surface roughness. FIG. 6 shows the embodiment FIG. 5 after the surface has been textured to provided ridges 327 in second bond coat layer 325. As shown in Fig. 6, in removing sections of second bond coat layer 325 to form ridges 327 it is possible that some amounts of first bond coat layer 320 will also be removed. See regions 329.

FIG. 7 shows the embodiment after FIG. 6 after new coating layers have been applied, in this case a new second bond coat layer 325a and a new top coat layer 330a. The new layers can be can be applied by any of the techniques used for applying the original layers. For example, the new layers may be applied by atmospheric plasma spray (APS), vacuum plasma spraying (VPS), low pressure plasma spray (LPPS), suspension plasma spraying (SPS), high velocity oxygen fuel spraying (HVOF), high velocity air fuel spraying (HVAF) chemical vapor deposition (CVD), physical vapor deposition (PVD), electron beam-physical vapor deposition (EB-PVD), plasma-spray physical vapor deposition (PS-PVD), or slurry coating.

While the above description focusses primarily on repairing damaged coating layer, it should be recognized that he method can also be used to refurbish CMC components. In other words, the method can be used to remove old coating layer(s), damaged or not, and apply a new improved coating layer(s) using different materials having better properties such as enhanced resistance to heat and/or corrosive agents or improved abradability.

The present disclosure provides an efficient method for repairing damaged or defective coating systems on CMC components in order to prolong the operational lifespan of the CMC components and/or to refurbish coatings on CMC components.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method of repairing a ceramic matrix composite (CMC) component (300) having one or more damaged coating layers, comprising:
removing at least partially the one or more damaged coating layers from a CMC component (330) comprising a substrate (310) and a coating system having multiple coating layers (320, 325, 330) to produce an intermediate CMC component comprising the substrate and at least one partial coating layer, and
applying one or more replacement coating layers (325a, 330a) to replace the one or more at least partially removed damaged coating layers and produce a repaired CMC component.

2. The method according to claim 1, wherein the one or more damaged coating layers is removed by mechanical grinding, milling, laser, water jet, chemical stripping, or abrading.

3. The method according to claim 1 or 2, wherein the coating system comprises a bond layer and an environmental barrier coating layer.

4. The method according to claim 1, 2 or 3, wherein the coating system comprises a bond layer and a thermal barrier coating layer.

5. The method according to any preceding claim, wherein the coating system comprises a bond layer and an abradable coating layer and/or a machinable coating layer.

6. The method according to any preceding claim, wherein the coating system comprises a bond layer adjacent the substrate and one or more additional layers on top of the bond layer, and the one or more damaged coating layers removed from the CMC component include part of the bond layer.

7. The method according to any preceding claim, further comprising, after partial removal of the one or more damaged coating layers, the resultant surface of the intermediate CMC component is textured or roughened to improve the adherence of the one or more replacement coating layers.

8. The method according to claim 7, wherein texturing of the surface of the intermediate CMC component is performed by laser texturing, grit blasting, or machine texturing.

9. The method according to any preceding claim, further comprising, after partial removal of the one or more damaged coating layers, the resultant surface of the intermediate CMC component is subjected to chemically etching to roughened the resultant surface of the intermediate CMC component.

10. A method of refurbishing a ceramic matrix composite (CMC) component (300) comprising:
providing a ceramic matrix composite (CMC) component (300) having a coating system comprising a plurality of layers (320, 325, 330), including an environmental barrier coating layer, an abradable coating layer, and/or a thermal barrier coating layer,
removing at least partially one or more of the coating layers to produce an intermediate CMC component comprising a substrate (310) and at least one partial coating layer, and
applying one or more replacement coating layers (325a, 330a) to replace the one or more removed coating layers and produce a refurbished CMC component.

11. The method according to claim 10, wherein the one or more coating layer(s) is removed by mechanical grinding, milling, laser, water jet, chemical stripping, or abrading.

12. The method according to claim 10 or 11, wherein:
the coating system comprises a bond layer and an environmental barrier coating layer, and at least part of the environmental barrier coating layer and optionally part of the bond layer are removed; and/or
the coating system comprises a bond layer and a thermal barrier coating layer, and at least part of the thermal barrier coating layer and optionally part of the bond layer are removed.

13. The method according to claim 10, 11 or 12, further comprising:
after partial removal of the one or more coating layers, the resultant surface of the intermediate CMC component is textured to improve the adherence of the one or more replacement coating layers, wherein, optionally, texturing of the surface of the intermediate CMC component is performed by laser texturing, grit blasting, or machine texturing; and/or
after partial removal of the one or more coating layers, the resultant surface of the intermediate CMC component is subjected to chemically etching to roughened the resultant surface of the intermediate CMC component.

14. The method according to any preceding claim, wherein the CMC component is a blade outer air seal segment (BOAS segment), a turbine blade, a turbine blade platform, a vane, a vane platform, a combustor liner, a flap or seal of an exhaust nozzle, a flame holder, or an augmenter liner.

15. A repaired/refurbished ceramic matrix composite (CMC) component comprising:
a ceramic matrix composite (CMC) component (300) from which one or more coating layers (320, 325, 330) is partially removed, and
one or more coating layers (325a, 330a) applied to the ceramic matrix composite (CMC) component on top of the one or more partially removed coating layers to replace one or more partially removed coating layers and produce a repaired/refurbished CMC component.
